# EUROPÄISCHE PATENTSCHRIFT

(11) **EP 3 028 539 B1**
(45) Veröffentlichungstag und Bekanntmachung des Hinweises auf die Patenterteilung: **17.02.2021**
(21) Anmeldenummer: 14767124.2
(22) Anmeldetag: 24.07.2014
(51) Int. Cl.: H05B 6/06, H05B 6/12

(54) **KOCHFELDVORRICHTUNG**
COOKING HOB DEVIDE
SYSTÈME DE TABLE DE CUISSON

(30) Priorität: 02.08.2013 ES 201331221
(43) Veröffentlichungstag der Anmeldung: 08.06.2016
(73) Patentinhaber: BSH Hausgeräte GmbH, 81739 München (DE)
(72) Erfinder: GARDE ARANDA, Ignacio, E-50012 Zaragoza (ES); GRACIA CAMPOS, Oscar, E-50008 Zaragoza (ES); HERRERA RODRIGUEZ, Javier, E-50009 Zaragoza (ES); PALACIOS TOMAS, Daniel, E-50008 Zaragoza (ES); VILLANUEVA VALERO, Beatriz, E-44500 Andorra Teruel (ES)
(86) Internationale Anmeldenummer: PCT/IB2014/063380
(87) Internationale Veröffentlichungsnummer: WO 2015/015376

(56) Entgegenhaltungen:
- EP-A1- 1 505 854
- EP-A1- 2 509 392
- EP-A1- 2 551 600
- EP-A2- 2 506 668
- WO-A1-2008/061916
- WO-A2-2010/063539

## Beschreibung

Die Erfindung betrifft eine Kochfeldvorrichtung nach dem Patentanspruch 1 Kochfeldvorrichtungen mit variablen Kochfeldflächen sind beispielsweise aus EP2509392, EP2506668, EP1505854, EP2551600 bekannt.

Die Aufgabe der Erfindung besteht insbesondere darin, eine gattungsgemäße Vorrichtung mit verbesserten Eigenschaften hinsichtlich eines hohen Komforts für einen Bediener und/oder einer hohen Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Es wird eine Kochfeldvorrichtung, insbesondere eine Induktionskochfeldvorrichtung, mit zumindest zwei variablen Kochflächenbereichen, die jeweils durch eine Anordnung von zumindest zwei, insbesondere von zumindest drei, vorteilhaft von zumindest vier Heizelementen festgelegt sind, und mit zumindest einem weiteren Heizelement, das zwischen den variablen Kochflächenbereichen angeordnet ist, und mit zumindest einer Steuereinheit, die dazu vorgesehen ist, das weitere Heizelement in Abhängigkeit von zumindest einem Betriebsparameter zumindest einem der variablen Kochflächenbereiche zuzuordnen und zumindest eine Zuordnung des weiteren Heizelements zu zumindest einem der variablen Kochflächenbereiche mittels zumindest einer Ausgabeeinheit auszugeben, vorgeschlagen. Unter einem "variablen Kochflächenbereich" soll insbesondere ein Kochflächenbereich verstanden werden, der dazu vorgesehen ist, zumindest eine an zumindest ein aufgestelltes Gargeschirr angepasste Kochzone zu bilden. Insbesondere unterscheidet sich der variable Kochflächenbereich von einer Kochfläche bei der Heizzonen, insbesondere durch Markierungen auf der Kochfläche, fest vorgegeben sind. Insbesondere ist der variable Kochflächenbereich von zumindest zwei, insbesondere von zumindest drei, vorteilhaft von zumindest vier Heizelementen gebildet. Insbesondere sind die den variablen Kochflächenbereich ausbildenden Heizelemente in einer einzelnen Reihe angeordnet. Unter einer "Reihe" soll insbesondere eine Zeile und/oder eine Spalte und/oder ein Streifen verstanden werden. Insbesondere sind die Heizelemente entlang einer die Heizelemente verbindenden Reihenlängsrichtung, die insbesondere als eine Gerade ausgebildet ist, aneinander angeordnet, insbesondere aufgereiht. Insbesondere verbindet die Reihenlängsrichtung Schwerpunkte der Heizelemente. Ebenfalls denkbar ist, dass die Heizelemente versetzt angeordnet sind, wobei Schwerpunkte der Heizelemente zu einer Geraden, die zumindest im Wesentlichen parallel zu der Reihenlängsrichtung ausgerichtet ist und die die Heizelemente zumindest im Wesentlichen mittig miteinander verbindet, einen Abstand aufweisen, der kleiner ist als 50 %, insbesondere kleiner als 40 %, vorteilhaft kleiner als 30 % eines Betrags zumindest einer Erstreckung, insbesondere einer Längserstreckung und/oder einer Quererstreckung, zumindest eines der die Reihe ausbildenden Heizelemente. Unter einer "einzelnen" Reihe aus zumindest zwei Heizelementen soll insbesondere eine Reihe verstanden werden, bei welcher die Heizelemente in, insbesondere genau, einer Reihenlängsrichtung benachbart angeordnet sind, wobei die Steuereinheit dazu vorgesehen ist, lediglich aus den in Reihenlängsrichtung benachbart angeordneten Heizelementen zumindest eine an zumindest ein aufgestelltes Gargeschirr angepasste Kochzone zu bilden. Insbesondere ist zumindest ein zusätzliches Heizelement, das von den die Reihe ausbildenden Heizelementen getrennt ausgebildet und Teil einer von der Reihe getrennt ausgebildeten zusätzlichen Reihe ist, zu jedem der die Reihe ausbildenden Heizelemente beabstandet angeordnet. Insbesondere weist das zusätzliche Heizelement zu jedem der die Reihe ausbildenden Heizelemente bezüglich einer Reihenquerrichtung, die zumindest im Wesentlichen senkrecht zu der Reihenlängsrichtung ausgerichtet ist, einen Abstand auf, der größer ist als 15 %, insbesondere größer als 30 %, vorteilhaft größer als 40 %, bevorzugt größer als 50 %, besonders bevorzugt größer als 75 % eines Betrags zumindest einer Erstreckung, insbesondere einer Längserstreckung und/oder einer Quererstreckung, zumindest eines der die Reihe ausbildenden Heizelemente. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene bei einer Projektion auf zumindest eine Projektionsebene, in der zumindest eine der Geraden und/oder eine der Ebenen angeordnet ist, einen Winkel einschließt, der vorzugsweise um weniger als 15°, vorteilhaft um weniger als 10° und insbesondere um weniger als 5° von einem Winkel von 90° abweicht. Alternativ oder zusätzlich ist denkbar, dass zumindest ein Teil der Heizelemente ein klassisches Kochfeld ausbildet. Ebenfalls denkbar ist, dass ein Teil einer Kochfläche als klassisches Kochfeld, ein Teil von zumindest einem weiteren Heizelement und ein weiterer Teil der Kochfläche als variabler Kochflächenbereich ausgebildet ist. Unter einem "Heizelement" soll insbesondere ein Element verstanden werden, das dazu vorgesehen ist, zumindest in einem Betriebsmodus elektrische Energie zumindest zu einem Großteil an ein Gargeschirr, vorzugsweise durch zumindest einen eine Kochfläche ausbildenden Grundkörper hindurch, zu übertragen und/oder elektrische Energie in Wärme umzuwandeln, um insbesondere zumindest ein aufgestelltes Gargeschirr, vorzugsweise durch zumindest einen eine Kochfläche ausbildenden Grundkörper hindurch, zu erhitzen. Insbesondere ist das Heizelement dazu vorgesehen, in zumindest einem Betriebsmodus, in dem das Heizelement an eine Versorgungselektronik angeschlossen ist, eine Leistung von zumindest 100 W, insbesondere zumindest 500 W, vorteilhaft zumindest 1000 W, vorzugsweise zumindest 2000 W zu übertragen. Insbesondere ist das Heizelement als ein Induktionsheizelement ausgebildet. Unter einem "Induktionsheizelement" soll insbesondere ein gewickelter elektrischer Leiter verstanden werden, der in zumindest einem Betriebsmodus von hochfrequentem Wechselstrom durchflossen ist. Insbesondere ist das Induktionsheizelement dazu vorgesehen, elektrische Energie in ein magnetisches Wechselfeld umzuwandeln, das dazu vorgesehen ist, in einem metallischen, vorzugsweise zumindest teilweise ferromagnetischen, Gargeschirr Wirbelströme und/oder Ummagnetisierungseffekte hervorzurufen, die in Wärme umgewandelt werden. Vorzugsweise ist das Induktionsheizelement dazu vorgesehen, eine Erwärmung des Gargeschirrs zu verursachen. Vorzugsweise ist das Induktionsheizelement dazu vorgesehen, in dem Betriebsmodus elektrische Energie in elektromagnetische Feldenergie zu wandeln, die in einem geeigneten Gargeschirr letztendlich in Wärme gewandelt wird. Vorteilhaft umfasst die Kochfeldvorrichtung zumindest eine Versorgungselektronik zumindest zu einer Versorgung der Heizelemente. Insbesondere umfasst die Versorgungselektronik zumindest eine Heizfrequenzeinheit, insbesondere zumindest zwei, vorteilhaft zumindest drei, vorzugsweise zumindest vier Heizfrequenzeinheiten, zu einer Versorgung zumindest eines Heizelements. Insbesondere ist eine Heizfrequenzeinheit der Versorgungselektronik zu einer Versorgung von zwei, insbesondere nebeneinander angeordneten Heizelementen vorgesehen. Unter einer "Heizfrequenzeinheit" soll insbesondere eine elektrische Einheit verstanden werden, die ein oszillierendes elektrisches Signal, vorzugsweise mit einer Frequenz von zumindest 1 kHz, insbesondere von wenigstens 10 kHz, vorteilhaft von mindestens 20 kHz und insbesondere von maximal 100 kHz für ein Heizelement erzeugt. Insbesondere ist die Heizfrequenzeinheit dazu vorgesehen, eine, von dem Heizelement geforderte, maximale elektrische Leistung von zumindest 1000 W, insbesondere zumindest 2000 W, vorteilhaft zumindest 3000 W und vorzugsweise zumindest 3500 W bereitzustellen. Die Heizfrequenzeinheit umfasst insbesondere zumindest einen Wechselrichter, der vorzugsweise zumindest zwei, vorzugsweise in Reihe geschaltete, bidirektionale unipolare Schalter, die insbesondere von einem Transistor und einer parallel geschalteten Diode gebildet sind, und besonders vorteilhaft zumindest jeweils einen parallel zu den bidirektionalen unipolaren Schaltern geschaltete Dämpfungskapazität, die insbesondere von zumindest einem Kondensator gebildet ist, aufweist. Insbesondere weist die Kochfeldvorrichtung zumindest einen Grundkörper zumindest zu einem Aufstellen von Gargeschirr auf. Insbesondere bildet der Grundkörper zumindest im Wesentlichen eine Kochfläche aus. Unter der Wendung, dass das weitere Heizelement zumindest im Wesentlichen "zwischen" den variablen Kochflächenbereichen angeordnet ist, soll insbesondere verstanden werden, dass bei Betrachtung einer Projektion des variablen Kochflächenbereichs und des weiteren Heizelements auf zumindest eine Ebene, insbesondere auf eine durch den Grundkörper gebildete Kochfläche, zumindest eine kürzeste, die variablen Kochflächenbereiche verbindende Linie existiert, die das weitere Heizelement schneidet. Insbesondere ist das weitere Heizelement zu einem Massenanteil und/oder Volumenanteil von mehr als 70 %, insbesondere von mehr als 80 %, vorteilhaft von mehr als 90 % zwischen den variablen Kochflächenbereichen angeordnet. Unter einer "Steuereinheit" soll insbesondere eine elektronische Einheit verstanden werden, die vorzugsweise in einer Steuer- und/oder Regeleinheit eines Kochfelds zumindest teilweise integriert ist und die vorzugsweise dazu vorgesehen ist, zumindest die Heizelemente zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Vorteilhaft weist die Kochfeldvorrichtung zumindest eine Sensoreinheit auf, die insbesondere von den Heizelementen selbst gebildet ist, die dazu vorgesehen ist, aufgestelltes Gargeschirr insbesondere mittels Messung zumindest einer Induktivität und/oder zumindest einer Kapazität zu detektieren. Insbesondere ist die Steuereinheit dazu vorgesehen, Messwerte der Sensoreinheit auszuwerten, zumindest eine Heizzone zu berechnen und Heizelemente festzulegen, die diese Heizzone bilden. Insbesondere ist die Steuereinheit dazu vorgesehen, einem detektierten Gargeschirr eine in Form, Größe und/oder Position angepasste Heizzone zuzuordnen. Unter der Wendung, dass die Steuereinheit dazu vorgesehen ist, das weitere Heizelement "in Abhängigkeit von zumindest einem Betriebsparameter zumindest einem der variablen Kochflächenbereiche" zuzuordnen, soll insbesondere verstanden werden, dass die Steuereinheit dazu vorgesehen ist, das weitere Heizelement in unterschiedlichen Betriebsmodi unterschiedlichen variablen Kochflächenbereichen zuzuordnen. Insbesondere ist die Steuereinheit dazu vorgesehen, in zumindest einem ersten Betriebsmodus das weitere Heizelement einem ersten der variablen Kochflächenbereiche zuzuordnen. Insbesondere ist die Steuereinheit dazu vorgesehen, in zumindest einem zweiten Betriebsmodus das weitere Heizelement einem zweiten, insbesondere von dem ersten getrennt ausgebildeten, der variablen Kochflächenbereiche zuzuordnen. Unter der Wendung, dass die Steuereinheit dazu vorgesehen ist, das weitere Heizelement in Abhängigkeit von zumindest einem Betriebsparameter zumindest einem der variablen Kochflächenbereiche "zuzuordnen", soll insbesondere verstanden werden, dass die Steuereinheit dazu vorgesehen ist, in jedem Betriebszustand, in dem das weitere Heizelement einem ersten der variablen Kochflächenbereiche zugeordnet ist, das weitere Heizelement mit zumindest einer der Heizfrequenzeinheiten zu betreiben, die den Heizelementen des ersten der variablen Kochflächenbereiche zugeordnet sind. Beispielsweise könnte der Betriebsparameter als Auslastung der Versorgungselektronik, die insbesondere zu einer Versorgung zumindest eines variablen Kochflächenbereichs vorgesehen ist, und/oder einer Voreinstellung, insbesondere in einer Speichereinheit der Steuereinheit, ausgebildet sein. Vorteilhaft ist der Betriebsparameter als Gargeschirr-Belegung und/oder als Bedieneingabe mittels zumindest einer Eingabeeinheit ausgebildet. Alternativ sind weitere, einem Fachmann als sinnvoll erscheinende Betriebsparameter denkbar. Unter der Wendung, dass ein Heizelement einer Heizfrequenzeinheit "zugeordnet" ist, soll insbesondere verstanden werden, dass das Heizelement in jedem Betriebszustand, in welchem das Heizelement betrieben wird, eine zum Betrieb des Heizelements notwendige Heizenergie von der Heizfrequenzeinheit bezieht. Unter der Wendung, dass die Steuereinheit dazu vorgesehen ist, zumindest ein Heizelement zu "betreiben", soll insbesondere verstanden werden, dass die Steuereinheit dazu vorgesehen ist, die Versorgungselektronik anzusteuern, die das Heizelement versorgt. Unter einer "Ausgabeeinheit" soll insbesondere eine Einheit mit zumindest einem Ausgabeelement, vorteilhaft mit zumindest zwei Ausgabeelementen, zumindest zu einer Ausgabe einer Zuordnung des weiteren Heizelements zu zumindest einem der variablen Kochflächenbereiche verstanden werden. Unter einem "Ausgabeelement" soll insbesondere ein Element verstanden werden, das zumindest zwei Ausgabezustände aufweist und in zumindest einem Ausgabezustand eine optische und/oder akustische Ausgabe vermittelt und vorzugsweise ein für einen Menschen sichtbares und/oder hörbares Signal abgibt. Vorzugsweise ist das Ausgabeelement als optisches Ausgabeelement ausgebildet. Alternativ oder zusätzlich ist denkbar, dass das Ausgabeelement als akustisches Ausgabeelement ausgebildet und zu einer akustischen Ausgabe vorgesehen ist. Insbesondere ist das Ausgabeelement zumindest zu einer optischen Ausgabe und/oder einer Klartextanzeige vorgesehen. Unter einer "Klartextanzeige" soll insbesondere ein Ausgabeelement verstanden werden, das mehrere Ausgabemittel aufweist und dazu vorgesehen ist, zumindest ein Zeichen, insbesondere zumindest zwei Zeichen, vorteilhaft zumindest drei Zeichen, vorzugsweise zumindest vier Zeichen, insbesondere gleichzeitig, vorzugsweise lesbar, darzustellen. Insbesondere weist das Ausgabeelement zumindest eine Leuchtdiode, zumindest ein Fluoreszenz-Element und/oder zumindest ein LCD-Element auf. Ebenfalls denkbar ist, dass das Ausgabeelement zumindest ein Leuchtmittel, vorzugsweise zumindest eine LED, und/oder zumindest eine, vorzugsweise hinterleuchtete, Displayeinheit, insbesondere zumindest eine Matrixdisplayeinheit, vorzugsweise zumindest ein LCD-Display, zumindest ein OLED-Display und/oder zumindest elektronisches Papiers (e-paper, E-Ink), aufweist. Unter einem "Zeichen" soll insbesondere eine Ziffer, ein Buchstabe und/oder ein Schriftzeichen verstanden werden. Insbesondere ist die Klartextanzeige als Segmentanzeige, vorzugsweise als Matrixanzeige, ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort für einen Bediener und/oder eine hohe Flexibilität erreicht werden. Vorteilhaft kann ein Bediener informiert werden. Insbesondere kann einem Bediener eine Zuordnung des weiteren Heizelements zu einem der variablen Kochflächenbereiche ausgegeben werden. Vorteilhaft kann ein Bediener eine fehlerhafte Zuordnung des weiteren Heizelements zu einem der variablen Kochflächenbereiche erkennen und/oder korrigieren. Vorteilhaft kann, insbesondere mittels lediglich eines zusätzlichen Heizelements, ein großer Kochflächenbereich erreicht werden, insbesondere unter Vermeidung einer wesentlichen Erhöhung einer Anzahl an Heizelementen. Insbesondere können Gargeschirre beheizt werden, deren Durchmesser und/oder Erstreckung größer ist als eine Erstreckung der Heizelemente. Vorzugsweise kann ein hoher Komfort für einen Bediener erreicht werden.

Ferner wird vorgeschlagen, dass die Steuereinheit dazu vorgesehen ist, eine Zuordnung des weiteren Heizelements zu einem ersten der variablen Kochflächenbereiche mittels zumindest eines ersten Ausgabeelements der Ausgabeeinheit und eine Zuordnung des weiteren Heizelements zu einem zweiten der variablen Kochflächenbereiche mittels zumindest eines zweiten Ausgabeelements der Ausgabeeinheit auszugeben. Dadurch kann insbesondere eine flexible Ausgestaltung erreicht werden. Weiterhin kann vorteilhaft ein hoher Komfort für einen Bediener und/oder eine übersichtliche Ausgabe der Zuordnung des weiteren Heizelements zu einem ersten der variablen Kochflächenbereiche erreicht werden.

Zudem wird vorgeschlagen, dass die Kochfeldvorrichtung zumindest eine Ausgabeeinheit mit zumindest zwei Ausgabeelementen aufweist, die an einander gegenüberliegenden Seiten zumindest einer Abbildung der variablen Kochflächenbereiche angeordnet sind. Insbesondere ist die Abbildung der variablen Kochflächenbereiche zumindest im Wesentlichen, vorteilhaft vollständig, zwischen den Anzeigeelementen der Ausgabeeinheit angeordnet. Insbesondere ist die Abbildung der variablen Kochflächenbereiche als Darstellung der variablen Kochflächenbereiche mittels der Ausgabeeinheit, insbesondere mittels zumindest eines Displays der Ausgabeeinheit ausgebildet. Insbesondere ist das erste Ausgabeelement an einer den ersten variablen Kochflächenbereich darstellenden Seite der Abbildung angeordnet. Insbesondere ist das zweite Ausgabeelement an einer den zweiten variablen Kochflächenbereich darstellenden Seite der Abbildung angeordnet. Insbesondere ist die Steuereinheit dazu vorgesehen, mittels der Ausgabeelemente eine Zuordnung des weiteren Heizelements zu einem der variablen Kochflächenbereiche optisch und/oder geometrisch auszugeben. In einer alternativen Ausgestaltung der Erfindung ist denkbar, dass die zumindest zwei Ausgabeelemente der Ausgabeeinheit zwischen einer Abbildung eines ersten der variablen Kochflächenbereiche und einer Abbildung eines zweiten der variablen Kochflächenbereiche angeordnet ist. Ebenfalls denkbar ist, dass die Ausgabeeinheit genau ein Ausgabeelement aufweist, das zwischen einer Abbildung eines ersten der variablen Kochflächenbereiche und einer Abbildung eines zweiten der variablen Kochflächenbereiche angeordnet ist und dazu vorgesehen ist, eine Zuordnung zu unterschiedlichen der variablen Kochflächenbereiche in unterschiedlichen Darstellungsarten auszugeben, beispielsweise in unterschiedlichen Farben, mit unterschiedlicher Intensität und/oder mittels unterschiedlich blickenden Lichtern. Dadurch kann insbesondere ein hoher Komfort für einen Bediener erreicht werden. Insbesondere kann ein Bediener schnell und/oder einfach eine Zuordnung des weiteren Heizelements zu einem ersten der variablen Kochflächenbereiche erkennen. Vorzugsweise kann eine falsche Interpretation einer Zuordnung des weiteren Heizelements zu einem der variablen Kochflächenbereiche vermieden werden.

Weiterhin wird vorgeschlagen, dass die Steuereinheit dazu vorgesehen ist, das weitere Heizelement in Abhängigkeit von einer Gargeschirr-Belegung, insbesondere automatisch, vorteilhaft selbsttätig, vorzugsweise unter Vermeidung einer Bedieneingabe mittels zumindest einer Eingabeeinheit, einem der variablen Kochflächenbereiche zuzuordnen. Insbesondere ist die Steuereinheit dazu vorgesehen, bei einer Belegung zumindest eines Heizelements des ersten variablen Kochflächenbereichs und des weiteren Heizelements durch ein, insbesondere einziges aufgestelltes Gargeschirr, wobei Heizelemente des zweiten variablen Kochflächenbereichs durch das eine, insbesondere einzige aufgestellte Gargeschirr unbelegt sind, das weitere Heizelement dem ersten variablen Kochflächenbereich zuzuordnen, insbesondere unabhängig von einer Belegung weiterer Heizelemente der variablen Kochflächenbereiche durch weiteres aufgestelltes Gargeschirr. Insbesondere ist die Steuereinheit dazu vorgesehen, bei einer Belegung zumindest eines Heizelements des zweiten variablen Kochflächenbereichs und des weiteren Heizelements durch ein, insbesondere einziges aufgestelltes Gargeschirr, wobei Heizelemente des ersten variablen Kochflächenbereichs durch das eine, insbesondere einzige aufgestellte Gargeschirr unbelegt sind, das weitere Heizelement dem zweiten variablen Kochflächenbereich zuzuordnen, insbesondere unabhängig von einer Belegung weiterer Heizelemente der variablen Kochflächenbereiche durch weiteres aufgestelltes Gargeschirr. Vorteilhaft ist die Gargeschirr-Belegung zumindest abhängig von Größe, Material, Form und/oder Anzahl von aufgestelltem Gargeschirr. Insbesondere ist die Gargeschirr-Belegung zumindest abhängig von einer Anzahl an Heizfrequenzeinheiten, die zu einem Betreiben von, insbesondere durch aufgestelltes Gargeschirr bedeckten Heizelementen benötigt werden. Dadurch kann insbesondere eine flexible und/oder energiesparende Ausgestaltung erreicht werden. Zudem kann vorteilhaft Flicker und/oder Intermodulationsbrummen vermieden werden. Vorteilhaft kann eine gleichmäßige Wärmeverteilung und/oder ein schneller Heizvorgang erreicht werden.

Ferner wird vorgeschlagen, dass die Steuereinheit dazu vorgesehen ist, das weitere Heizelement in Abhängigkeit von einer Bedieneingabe mittels zumindest einer Eingabeeinheit einem der variablen Kochflächenbereiche zuzuordnen. Insbesondere umfasst die Kochfeldvorrichtung zumindest eine Eingabeeinheit zumindest zu einer Bedieneingabe von zumindest einer Betriebskenngröße. Insbesondere sind die Eingabeeinheit und die Ausgabeeinheit zumindest teilweise, insbesondere zumindest größtenteils, vorteilhaft vollständig, einstückig ausgebildet. Beispielsweise ist die Bedieneinheit zu einer Auswahl und/oder Veränderung einer Heizzone vorgesehen. Zudem könnte die Bedieneinheit zu einer Einstellung einer Heizleistung und/oder Heizleistungsdichte einer Heizzone vorgesehen sein. Ebenfalls denkbar ist, dass die Bedieneinheit zu einer Auswahl und/oder Veränderung einer Garzeit und/oder eines Garprogramms ausgebildet ist. Weiterhin ist denkbar, dass die Bedieneinheit zu einem Wechsel eines Betriebsmodus und/oder Betriebszustands vorgesehen ist. Alternativ sind weitere, einem Fachmann als sinnvoll erscheinende Ausbildungen der Bedieneinheit und/oder der Betriebskenngrößen denkbar. Unter einer "Bedieneingabe" soll insbesondere eine Betätigung der Eingabeeinheit durch einen Bediener verstanden werden. Dadurch kann insbesondere ein hoher Komfort für einen Bediener erreicht werden.

Zudem wird vorgeschlagen, dass die Steuereinheit dazu vorgesehen ist, eine existierende Zuordnung des weiteren Heizelements zu einem der variablen Kochflächenbereiche in Abhängigkeit von einer Positionsänderung, insbesondere einer Neu-Positionierung, vorteilhaft einem Anheben und einem erneuten Aufstellen auf zumindest im Wesentlichen derselben Position, eines Gargeschirrs zu verändern. Insbesondere ist die Steuereinheit dazu vorgesehen, bei unklarer Gargeschirr-Belegung einen Bediener mittels der Ausgabeeinheit zu einer Positionsänderung zumindest eines aufgestellten Gargeschirrs aufzufordern. Vorzugsweise ist die Steuereinheit dazu vorgesehen, eine existierende Zuordnung des weiteren Heizelements zu einem der variablen Kochflächenbereiche in Abhängigkeit von einer Bedieneingabe mittels der Eingabeeinheit zu verändern. Unter einer "unklaren" Gargeschirr-Belegung soll insbesondere verstanden werden, dass durch aufgestelltes Gargeschirr zumindest ein Heizelement des ersten variablen Kochflächenbereichs, zumindest ein Heizelement des zweiten variablen Kochflächenbereichs und zumindest das weitere Heizelement bedeckt sind, wobei im Falle mehrerer aufgestellter Gargeschirre die Gargeschirre aus Sicht der Steuereinheit zumindest im Wesentlichen zeitgleich aufgestellt und zumindest im Wesentlichen gleich ausgebildet sind. Beispielsweise könnten im Falle mehrerer Gargeschirre die Gargeschirre vor Aktivierung der Steuereinheit aufgestellt und zumindest im Wesentlichen aus demselben Material ausgebildet sein. Dadurch kann insbesondere eine flexible Ausgestaltung erreicht werden.

Weiterhin wird vorgeschlagen, dass die den variablen Kochflächenbereich ausbildenden Heizelemente als längliche Heizelemente ausgebildet und bezüglich zumindest einer Längsachse der Heizelemente der variablen Kochflächenbereiche benachbart angeordnet sind. Unter einem "länglichen" Heizelement soll insbesondere ein Heizelement verstanden werden, das bei einer Betrachtung einer Projektion des Heizelements in eine Ebene zumindest eine Längserstreckung aufweist, die größer ist als eine Quererstreckung des Heizelements. Insbesondere ist die Längserstreckung des Heizelements um einen Faktor von mehr als 1,2, insbesondere um einen Faktor von mehr als 1,5 und vorzugsweise um einen Faktor von mehr als 1,8 größer als die Quererstreckung des Heizelements. Vorzugsweise ist die Längserstreckung des Heizelements um einen Faktor von weniger als 3, insbesondere um einen Faktor von weniger als 2,5 und vorzugsweise um einen Faktor von weniger als 2,3 größer als die Quererstreckung des Heizelements. Unter einer "Längserstreckung" zumindest eines Elements, insbesondere des Heizelements, soll bei einer Betrachtung einer Projektion des Elements in eine Ebene insbesondere eine Erstreckung einer langen Seite eines kleinsten gedachten das Element umschließenden Rechtecks verstanden werden. Unter einer "Quererstreckung" zumindest eines Elements, insbesondere des Heizelements, soll bei einer Betrachtung einer Projektion des Elements in eine Ebene insbesondere eine Erstreckung einer kurzen Seite eines kleinsten gedachten das Element umschließenden Rechtecks verstanden werden. Unter einer "Längsachse" zumindest eines Elements, insbesondere des Heizelements, soll insbesondere eine Achse verstanden werden, die zumindest im Wesentlichen parallel zu der Längserstreckung des Elements ausgerichtet ist. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der vorzugsweise um weniger als 15°, vorteilhaft um weniger als 10° und insbesondere um weniger als 5° von einem Winkel von 0° abweicht. Unter der Wendung, dass die Heizelemente bezüglich zumindest einer Längsachse der Heizelemente der variablen Kochflächenbereiche "benachbart" angeordnet sind, soll insbesondere verstanden werden, dass die Längsachsen der Heizelemente zumindest im Wesentlichen parallel zueinander ausgerichtet sind und dass die Heizelemente bezüglich zumindest einer ersten Richtung, die zumindest im Wesentlichen senkrecht zu einer Längsachse zumindest eines der Heizelemente, vorzugsweise zu einer Längsachse eines jeden der Heizelemente, ausgerichtet ist, einen Abstand aufweisen, der kleiner ist als 25 %, insbesondere kleiner als 15 %, vorteilhaft kleiner als 10 %, vorzugsweise kleiner als 5 %, vorteilhaft kleiner als 3 % eines Betrags zumindest einer Erstreckung, insbesondere einer Quererstreckung, zumindest eines der Heizelemente in der ersten Richtung. Unter einem "Abstand" zwischen zwei Heizelementen soll insbesondere eine kürzeste Strecke verstanden werden, die bei Betrachtung einer Projektion auf zumindest eine Ebene, insbesondere auf eine Kochfläche, ein kleinstes ein erstes der Heizelemente umschließendes Rechteck und ein kleinstes ein zweites der Heizelemente umschließendes Rechteck verbindet. Dadurch kann insbesondere eine symmetrische und/oder platzsparende Ausgestaltung erreicht werden.

Ferner wird vorgeschlagen, dass das weitere Heizelement als längliches Heizelement ausgebildet ist und eine Längsachse aufweist, die zumindest im Wesentlichen senkrecht zu den Längsachsen der Heizelemente der variablen Kochflächenbereiche ausgerichtet ist. Dadurch können insbesondere geringe Kosten und/oder eine hohe Flexibilität erreicht werden. Vorteilhaft kann, insbesondere mittels lediglich eines zusätzlichen Heizelements, ein großer Kochflächenbereich erreicht werden, insbesondere unter Vermeidung einer wesentlichen Erhöhung einer Anzahl an Heizelementen. Insbesondere kann ein Gargeschirr flexibel auf einem großen Kochflächenbereich aufgestellt werden. Insbesondere können Gargeschirre beheizt werden, deren Durchmesser und/oder Erstreckung größer ist als eine Erstreckung der Heizelemente.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Kochfeld mit einer erfindungsgemäßen Kochfeldvorrichtung in einer schematischen Draufsicht, wobei eine erste Gargeschirr-Belegung dargestellt ist,
- Fig. 2: das erfindungsgemäße Kochfeld mit der erfindungsgemäßen Kochfeldvorrichtung aus Fig. 1 in einer schematischen Draufsicht, wobei eine zweite Gargeschirr-Belegung dargestellt ist,
- Fig. 3: das erfindungsgemäße Kochfeld mit der erfindungsgemäßen Kochfeldvorrichtung aus Fig. 1 in einer schematischen Draufsicht, wobei eine dritte Gargeschirr-Belegung dargestellt ist und
- Fig. 4: eine schematische Darstellung einer Ausgabeeinheit der erfindungsgemäßen Kochfeldvorrichtung des erfindungsgemäßen Kochfelds aus Fig. 1 bis 3.

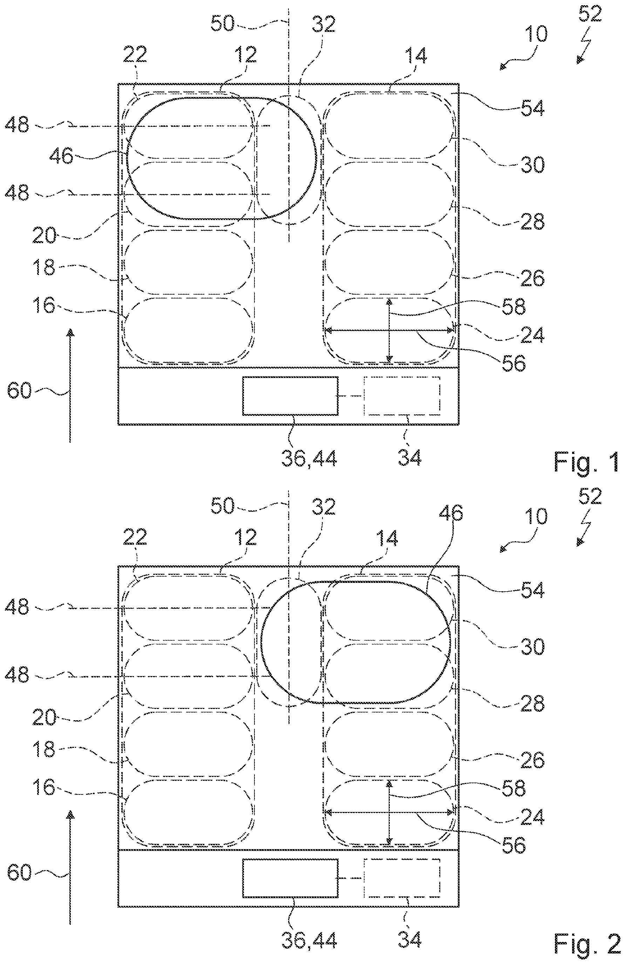

Fig. 1 zeigt ein erfindungsgemäßes Kochfeld 52, das als ein Induktionskochfeld ausgebildet ist, mit einer erfindungsgemäßen Kochfeldvorrichtung 10, die als eine Induktionskochfeldvorrichtung ausgebildet ist. Die Kochfeldvorrichtung 10 weist einen Grundkörper 54 zu einem Aufstellen von Gargeschirren 46 auf. Der Grundkörper 54 bildet eine Kochfläche aus. Die Kochfeldvorrichtung 10 umfasst einen ersten variablen Kochflächenbereich 12, der durch eine Anordnung von vier Heizelementen 16, 18, 20, 22 festgelegt ist. Die den ersten variablen Kochflächenbereich 12 ausbildenden Heizelemente 16, 18, 20, 22 sind als längliche Heizelemente 16, 18, 20, 22 ausgebildet.

Die den ersten variablen Kochflächenbereich 12 ausbildenden Heizelemente 16, 18, 20, 22 sind bezüglich einer Längsachse 48 der Heizelemente 16, 18, 20, 22 benachbart angeordnet. Die Kochfeldvorrichtung 10 umfasst einen zweiten variablen Kochflächenbereich 14. Der zweite variable Kochflächenbereich 14 ist durch eine Anordnung von vier Heizelementen 24, 26, 28, 30 festgelegt. Die den zweiten variablen Kochflächenbereich 14 ausbildenden Heizelemente 24, 26, 28, 30 sind als längliche Heizelemente 24, 26, 28, 30 ausgebildet. Die den zweiten variablen Kochflächenbereich 14 ausbildenden Heizelemente 24, 26, 28, 30 sind bezüglich einer Längsachse 48 der Heizelemente 24, 26, 28, 30 benachbart angeordnet. Jedes Heizelement 16, 18, 20, 22, 24, 26, 28, 30 weist eine Längserstreckung 56 auf, die größer ist als eine Quererstreckung 58 des Heizelements 16, 18, 20, 22, 24, 26, 28, 30.

Die Heizelemente 16, 18, 20, 22, 24, 26, 28, 30, die als Induktionsheizelemente ausgebildet sind, sind unterhalb des Grundkörpers 54 angeordnet. Die Heizelemente 16, 18, 20, 22, 24, 26, 28, 30 sind jeweils dazu vorgesehen, auf dem Grundkörper 54 oberhalb der Heizelemente 16, 18, 20, 22, 24, 26, 28, 30 aufgestelltes Gargeschirr 46 zu erhitzen. Die den ersten variablen Kochflächenbereich 12 ausbildenden Heizelemente 16, 18, 20, 22 sind in einer einzelnen Reihe angeordnet. In analoger Weise sind die den zweiten variablen Kochflächenbereich 14 ausbildenden Heizelemente 24, 26, 28, 30 in einer einzelnen Reihe angeordnet. Jeweils vier der Heizelemente 16, 18, 20, 22, 24, 26, 28, 30, die gemeinsam die einzelne Reihe ausbilden, sind bezüglich einer Reihenlängsrichtung 60 hintereinander angeordnet. Die Reihenlängsrichtung 60 ist im Wesentlichen senkrecht zu der Längsachse 48 der Heizelemente 16, 18, 20, 22, 24, 26, 28, 30 ausgerichtet. Die Reihenlängsrichtung 60 erstreckt sich ausgehend von einem in eingebautem Zustand einem Bediener zugewandten Bereich des Grundkörpers 54 in Richtung eines in eingebautem Zustand einem Bediener abgewandten Bereichs des Grundkörpers 54. Die die einzelne Reihe ausbildenden Heizelemente 16, 18, 20, 22, 24, 26, 28, 30 weisen bezüglich der Reihenlängsrichtung 60 einen Abstand auf, der wesentlich kleiner ist als die im Wesentlichen parallel zu der Reihenlängsrichtung 60 ausgerichtete Quererstreckung 58 der Heizelemente 16, 18, 20, 22, 24, 26, 28, 30.

Die Kochfeldvorrichtung 10a umfasst ein weiteres Heizelement 32, das zwischen den beiden variablen Kochflächenbereichen 12, 14 angeordnet ist. Das weitere Heizelement 32 ist in dem in eingebautem Zustand einem Bediener abgewandten Bereich des Grundkörpers 54 angeordnet. Das weitere Heizelement 32 als ist längliches Heizelement 32 ausgebildet. Das weitere Heizelement 32 weist eine Längsachse 50 auf, die im Wesentlichen senkrecht zu den Längsachsen 48 der Heizelemente 16, 18, 20, 22, 24, 26, 28, 30 der variablen Kochflächenbereiche 12, 14 ausgerichtet ist. Hierbei ist die Längsachse 50 des weiteren Heizelements 32 im Wesentlichen senkrecht zu den Längsachsen 48 der Heizelemente 16, 18, 20, 22, 24, 26,28,30 des ersten variablen Kochflächenbereichs 12 und des zweiten variablen Kochflächenbereichs 14 ausgerichtet.

Ein Schwerpunkt des weiteren Heizelements 32 ist bezüglich der Längsachse 50 des weiteren Heizelements 32 zwischen Schwerpunkten von zwei benachbart angeordneten Heizelementen 16, 18, 20, 22, 24, 26, 28, 30 der variablen Kochflächenbereiche 12, 14 angeordnet. Hierbei ist ein Schwerpunkt des weiteren Heizelements 32 bezüglich der Längsachse 50 des weiteren Heizelements 32 zwischen Schwerpunkten des dritten Heizelements 20 und des vierten Heizelements 28 angeordnet. Das weitere Heizelement 32 ist bei Betrachtung einer Projektion von Heizelementen 16, 18, 20, 22, 24, 26, 28, 30 der variablen Kochflächenbereiche 12, 14 auf die Längsachse 50 des weiteren Heizelements 32 in zwei Bereichen, die jeweils von einem Heizelement 16, 18, 20, 22, 24, 26, 28, 30 der variablen Kochflächenbereiche 12, 14 aufgespannt sind, jeweils teilweise angeordnet. Der Schwerpunkt des weiteren Heizelements 32 ist im Wesentlichen mittig zwischen Schwerpunkten von zwei benachbart angeordneten Heizelementen 16, 18, 20, 22, 24, 26, 28, 30 der variablen Kochflächenbereiche 12, 14 angeordnet. Hierbei bildet der Schwerpunkt des weiteren Heizelements 32 mit einer gedachten Verbindungslinie zwischen den Schwerpunkten der beiden benachbarten Heizelemente 16, 18, 20, 22, 24, 26, 28, 30 der variablen Kochflächenbereiche 12, 14 ein im Wesentlichen gleichschenkliges Dreieck aus.

Alternativ könnte der Schwerpunkt des weiteren Heizelements bezüglich der Längsachse des weiteren Heizelements in einem Bereich einer Quererstreckung eines der Heizelemente der variablen Kochflächenbereiche angeordnet sein. Der Schwerpunkt des weiteren Heizelements könnte im Wesentlichen auf einer Längsachse eines der Heizelemente der variablen Kochflächenbereiche angeordnet sein, beispielsweise des dritten Heizelements und/oder des siebten Heizelements. Das weitere Heizelement könnte bei Betrachtung einer Projektion von Heizelementen der variablen Kochflächenbereiche auf der Längsachse des weiteren Heizelements in drei Bereichen, die jeweils von einem Heizelement der variablen Kochflächenbereiche aufgespannt sind, jeweils teilweise angeordnet sein. Hierbei könnte das weitere Heizelement in einem ersten und einem dritten der Bereiche zu jeweils im Wesentlichen 50 % angeordnet sein. In einem zweiten der Bereiche, der im Wesentlichen mittig zwischen dem ersten und dem dritten der Bereiche angeordnet ist, könnte das weitere Heizelement komplett angeordnet sein.

Die Kochfeldvorrichtung 10 weist in dem in eingebautem Zustand einem Bediener zuweisenden Bereich eine Eingabeeinheit 44 zu einer Eingabe von Betriebskenngrößen auf. Eine Betriebskenngröße ist als Zuordnung des weiteren Heizelements 32 zu einem der variablen Kochflächenbereiche 12, 14 ausgebildet. Eine Betriebskenngröße ist als Einstellung einer Heizleistung und/oder Heizleistungsdichte einer Heizzone ausgebildet.

Alternativ sind weitere, einem Fachmann als sinnvoll erscheinende Ausbildungen der Betriebskenngrößen denkbar. In dem in eingebautem Zustand einem Bediener zuweisenden Bereich umfasst die Kochfeldvorrichtung 10 eine Ausgabeeinheit 36 zu einer Ausgabe von Betriebskenngrößen. Die Ausgabeeinheit 36 und die Eingabeeinheit 44 sind im Wesentlichen einstückig ausgebildet. In dem in eingebautem Zustand einem Bediener zuweisenden Bereich umfasst die Kochfeldvorrichtung 10 eine Steuereinheit 34. Die Steuereinheit 34 ist dazu vorgesehen, in Abhängigkeit der mittels der Eingabeeinheit 44 eingegebenen Betriebskenngrößen Aktionen auszuführen und/oder Einstellungen zu verändern. Die Kochfeldvorrichtung 10 umfasst eine Sensoreinheit zu einer Detektion von aufgestelltem Gargeschirr 46. Die Sensoreinheit ist im Wesentlichen einstückig mit den Heizelementen 16, 18, 20, 22, 24, 26, 28, 30 ausgebildet. Die Steuereinheit 34 ist mit der Sensoreinheit verbunden. Die Steuereinheit 34 und die Sensoreinheit sind elektrisch verbunden.

In einem Verfahren zum Betrieb der Kochfeldvorrichtung 10 ordnet die Steuereinheit 34 das weitere Heizelement 32 in Abhängigkeit von verschiedenen Betriebsparametern einem der variablen Kochflächenbereiche 12, 14 zu. Bei einer Belegung von zwei benachbarten Heizelementen 16, 18, 20, 22 des ersten variablen Kochflächenbereichs 12 und des weiteren Heizelements 32 durch ein einziges aufgestelltes Gargeschirr 46 ordnet die Steuereinheit 34 das weitere Heizelement 32 dem ersten variablen Kochflächenbereich 12 zu (vgl. Fig. 1). Bei einer Belegung von zwei benachbarten Heizelementen 24, 26, 28, 30 des zweiten variablen Kochflächenbereichs 14 und des weiteren Heizelements 32 durch ein einziges aufgestelltes Gargeschirr 46 ordnet die Steuereinheit 34 das weitere Heizelement 32 dem zweiten variablen Kochflächenbereich 14 zu (vgl. Fig. 2). Die Steuereinheit 34 ordnet in Abhängigkeit einer Gargeschirr-Belegung das weitere Heizelement 32 einem der variablen Kochflächenbereiche 12, 14 zu.

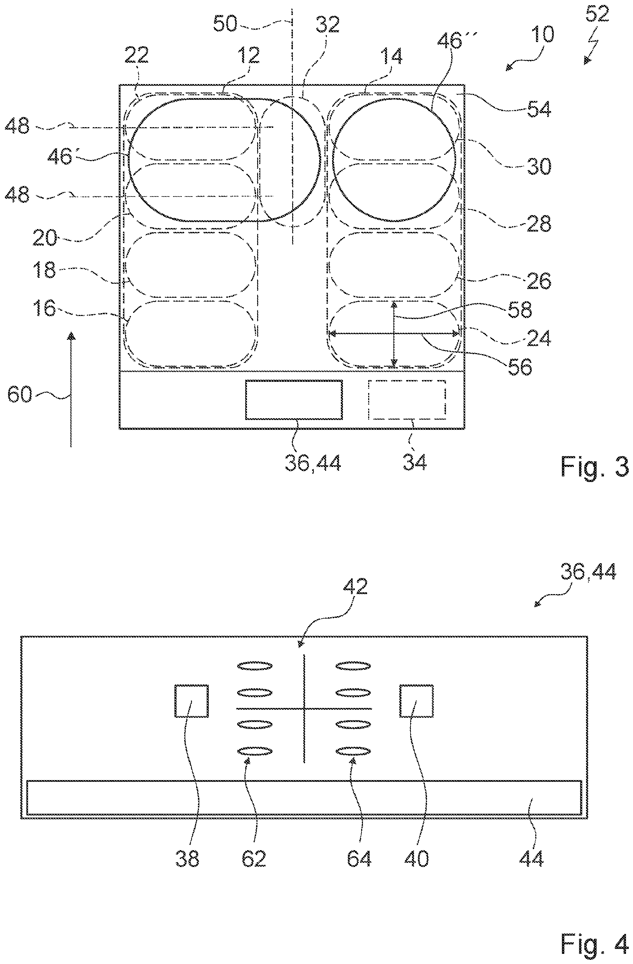

Die Steuereinheit 34 gibt eine Zuordnung des weiteren Heizelements 32 zu einem der variablen Kochflächenbereiche 12, 14 mittels der Ausgabeeinheit 36 aus. Die Steuereinheit 34 stellt mittels der Ausgabeeinheit 36 die variablen Kochflächenbereiche 12, 14 graphisch dar (vgl. Fig. 4). Die Steuereinheit 34 stellt mittels der Ausgabeeinheit 36 die Heizelemente 16, 18, 20, 22, 24, 26, 28, 30 der variablen Kochflächenbereiche 12, 14 graphisch dar. Eine Abbildung 42 der variablen Kochflächenbereiche 12, 14 umfasst einen ersten Abbildungsbereich 62 zu einer Darstellung des ersten variablen Kochflächenbereichs 12. Die Steuereinheit 34 stellt mittels der Ausgabeeinheit 36 in dem ersten Abbildungsbereich 62 die Heizelemente 16, 18, 20, 22 des ersten variablen Kochflächenbereichs 12 graphisch dar. Die Abbildung 42 der variablen Kochflächenbereiche 12, 14 umfasst einen zweiten Abbildungsbereich 64 zu einer Darstellung des zweiten variablen Kochflächenbereichs 14. Die Steuereinheit 34 stellt mittels der Ausgabeeinheit 36 in dem zweiten Abbildungsbereich 64 die Heizelemente 24, 26, 28, 30 des zweiten variablen Kochflächenbereichs 14 graphisch dar.

Die Ausgabeeinheit 36 umfasst zwei Ausgabeelemente 38, 40. Die Ausgabeelemente 38, 40 sind an einander gegenüberliegenden Seiten der Abbildung 42 der variablen Kochflächenbereiche 12, 14 angeordnet. Hierbei ist die Abbildung 42 der variablen Kochflächenbereiche 12, 14 zwischen den Ausgabeelementen 38, 40 angeordnet. Die Steuereinheit 34 gibt eine Zuordnung des weiteren Heizelements 32 zu dem ersten der variablen Kochflächenbereiche 12 mittels des ersten Ausgabeelements 38 der Ausgabeeinheit 36 aus. Die Steuereinheit 34 gibt eine Zuordnung des weiteren Heizelements 32 zu dem zweiten der variablen Kochflächenbereiche 14 mittels des zweiten Ausgabeelements 40 der Ausgabeeinheit 36 aus. Die Ausgabeelemente 38, 40, mittels denen die Steuereinheit 34 eine Zuordnung des weiteren Heizelements 32 zu einem der variablen Kochflächenbereiche 12, 14 ausgibt, sind im Gegensatz zu dem weiteren Heizelement 32, das zwischen den variablen Kochflächenbereichen 12, 14 angeordnet ist, auf einander gegenüberliegenden Seiten der Abbildung 42 der variablen Kochflächenbereiche 12, 14 angeordnet. Hierdurch kann eine falsche Interpretation einer Ausgabe einer Zuordnung des Heizelements 32 einem der variablen Kochflächenbereiche 12, 14 vermieden werden. Nach erfolgter Zuordnung des weiteren Heizelements 32 zu einem der variablen Kochflächenbereiche 12, 14 fordert die Steuereinheit 34 einen Bediener mittels der Ausgabeeinheit 36 zu einer Bedieneingabe mittels der Eingabeeinheit 44 auf. Beispielsweise fordert die Steuereinheit 34 einen Bediener zu einer Bedieneingabe einer Heizleistung und/oder einer Heizleistungsdichte auf. Die Steuereinheit 34 betreibt die von einem einzigen Gargeschirr 46 bedeckten Heizelemente 16, 18, 20, 22, 24, 26, 28, 30 eines der variablen Kochflächenbereiche 12, 14 sowie das weitere Heizelement 32 mit im Wesentlichen der gleichen Heizleistungsdichte. Beispielsweise betreibt die Steuereinheit 34 im Falle einer Belegung des dritten Heizelements 20, des vierten Heizelements 22 und des weiteren Heizelements 32 durch ein einziges aufgestelltes Gargeschirr 46 die beiden Heizelemente 20, 22 des ersten variablen Kochflächenbereichs 12 sowie das weitere Heizelement 32 mit im Wesentlichen der gleichen Heizleistungsdichte.

Die Steuereinheit 34 betreibt das weitere Heizelement 32 zusammen mit wenigstens einem der Heizelemente 16, 18, 20, 22, 24, 26, 28, 30 eines der variablen Kochflächenbereiche 12, 14. Die Steuereinheit 34 betreibt das weitere Heizelement 32 in Abhängigkeit von wenigstens einem der Heizelemente 16, 18, 20, 22, 24, 26, 28, 30 eines der variablen Kochflächenbereiche 12, 14. Alternativ ist denkbar, dass die Steuereinheit das weitere Heizelement in einem weiteren Betriebsmodus unabhängig von den variablen Kochflächenbereichen, insbesondere von den Heizelementen der variablen Kochflächenbereiche betreibt. Bedeckt in dem weiteren Betriebsmodus ein aufgestelltes Gargeschirrs nur das weitere Heizelement, so betreibt die Steuereinheit das weitere Heizelement zu einer Erhitzung des aufgestellten Gargeschirrs unabhängig von Heizelementen der variablen Kochflächenbereiche. Zudem betreibt die Steuereinheit in dem weiteren Betriebsmodus im Falle einer Bedeckung des weiteren Heizelements und wenigstens eines der Heizelemente eines der variablen Kochflächenbereiche das weitere Heizelement unabhängig von Heizelementen der variablen Kochflächenbereiche.

Beispielsweise wird vor Aktivierung der Steuereinheit 34 ein erstes Gargeschirr 46' auf zwei benachbarten Heizelementen 16, 18, 20, 22 des ersten variablen Kochflächenbereichs 12 und dem weiteren Heizelements 32 aufgestellt (vgl. Fig. 3). Zusätzlich hierzu wird vor Aktivierung der Steuereinheit 34 ein zweites Gargeschirr 46" auf zwei benachbarten Heizelementen 24, 26, 28, 30 des zweiten variablen Kochflächenbereichs 14 und dem weiteren Heizelements 32 aufgestellt. Hierbei sind das erste Gargeschirr 46' und das zweite Gargeschirr 46" im Wesentlichen gleich ausgebildet. Hierbei sind die Gargeschirre 46', 46" im Wesentlichen aus demselben Material und durch die Sensoreinheit ununterscheidbar. Beispielsweise sind die Gargeschirre 46', 46" von demselben Hersteller hergestellt. In dieser Situation wird die Steuereinheit 34 aktiviert. Nach Aktivierung der Steuereinheit 34 erkennt die Steuereinheit 34 eine vorliegende unklare Gargeschirr-Belegung. Je nach Voreinstellung der Steuereinheit 34 sind verschiedene Verfahrensverläufe denkbar. Die Voreinstellung der Steuereinheit 34 ist durch eine Bedieneingabe mittels der Eingabeeinheit 44 veränderbar.

In einem ersten Verfahrensverlauf ordnet die Steuereinheit 34 bei unklarer Gargeschirr-Belegung das weitere Heizelement 32 automatisch einem der variablen Kochflächenbereiche 12, 14 zu. Beispielsweise ordnet die Steuereinheit 34 das weitere Heizelement 32 dem zweiten variablen Kochflächenbereich 14 zu. Die Steuereinheit 34 gibt die erfolgte Zuordnung des weiteren Heizelements 32 zu dem zweiten variablen Kochflächenbereich 14 mittels der Ausgabeeinheit 36 aus. Ein Bediener erkennt die fehlerhafte Zuordnung des weiteren Heizelements 32 zu dem zweiten variablen Kochflächenbereich 14 und ordnet das weitere Heizelement 32 durch Bedieneingabe mittels der Eingabeeinheit 44 dem ersten variablen Kochflächenbereich 12 zu. Die Steuereinheit 34 verändert eine existierende Zuordnung des weiteren Heizelements 32 zu einem der variablen Kochflächenbereiche 12, 14 in Abhängigkeit von einer Bedieneingabe mittels der Eingabeeinheit 44. Eine weitere Möglichkeit zu einer Korrektur der fehlerhaften Zuordnung besteht in einer Neu-Positionierung eines der aufgestellten Gargeschirre 46', 46". Hebt ein Bediener nach Erkennung der fehlerhaften Zuordnung eines der aufgestellten Gargeschirre 46', 46" an, so ist eine Zuordnung anhand einer Detektion mittels der Sensoreinheit möglich. Die Steuereinheit 34 verändert eine existierende Zuordnung des weiteren Heizelements 32 zu einem der variablen Kochflächenbereiche 12, 14 in Abhängigkeit von einer Positionsänderung eines Gargeschirrs 46.

In einem zweiten Verfahrensverlauf fordert die Steuereinheit 34 bei unklarer Gargeschirr-Belegung einen Bediener mittels der Ausgabeeinheit 36 zu einer Positionsänderung von aufgestelltem Gargeschirrs 46 auf. Hierbei könnte die Steuereinheit 34 beispielsweise beide Ausgabeelemente 38, 40 gleichzeitig aktivieren, um beispielsweise mittels der gleichzeitig aktivierten Ausgabeelemente 38, 40 ein Blinksignal an einen Bediener ausgeben. Ebenfalls denkbar ist, dass die Steuereinheit 34 eine Warnmittelung mittels der Ausgabeeinheit 36 an einen Bediener ausgibt, um den Bediener auf die unklare Gargeschirr-Belegung hinzuweisen. Mittels der Ausgabeeinheit 36 fordert die Steuereinheit 34 bei unklarer Gargeschirr-Belegung einen Bediener zu einer Neu-Positionierung eines der aufgestellten Gargeschirre 46', 46" auf. Hebt ein Bediener eines der aufgestellten Gargeschirre 46', 46" an, so ist eine Zuordnung anhand einer Detektion mittels der Sensoreinheit möglich. Die Steuereinheit 34 ordnet das weitere Heizelement 32 in Abhängigkeit von einer Positionsänderung eines aufgestellten Gargeschirrs 46 einem der variablen Kochflächenbereiche 12, 14 zu. Eine weitere Möglichkeit eine Zuordnung des weiteren Heizelements 32 zu einem der variablen Kochflächenbereiche 12, 14 zu bewirken, besteht in einer Bedieneingabe mittels der Eingabeeinheit 44. Hierbei fordert die Steuereinheit 34 bei unklarer Gargeschirr-Belegung einen Bediener mittels der Ausgabeeinheit 36 zu einer Bedieneingabe mittels der Eingabeeinheit 44 auf. Die Steuereinheit 34 ordnet das weitere Heizelement 32 in Abhängigkeit von einer Bedieneingabe mittels der Eingabeeinheit 44 einem der variablen Kochflächenbereiche 12, 14 zu.

### Bezugszeichen

- 10: Kochfeldvorrichtung
- 12: Variabler Kochflächenbereich
- 14: Variabler Kochflächenbereich
- 16: Heizelement
- 18: Heizelement
- 20: Heizelement
- 22: Heizelement
- 24: Heizelement
- 26: Heizelement
- 28: Heizelement
- 30: Heizelement
- 32: Weiteres Heizelement
- 34: Steuereinheit
- 36: Ausgabeeinheit
- 38: Erstes Ausgabeelement
- 40: Zweites Ausgabeelement
- 42: Abbildung
- 44: Eingabeeinheit
- 46: Gargeschirr
- 48: Längsachse
- 50: Längsachse
- 52: Kochfeld
- 54: Grundkörper
- 56: Längserstreckung
- 58: Quererstreckung
- 60: Reihenlängsrichtung
- 62: Abbildungsbereich
- 64: Abbildungsbereich

## Patentansprüche

1. Kochfeldvorrichtung, insbesondere Induktionskochfeldvorrichtung, mit zumindest zwei variablen Kochflächenbereichen (12, 14), welche voneinander getrennt ausgebildet sind, die jeweils durch eine Anordnung von zumindest zwei Heizelementen (16, 18, 20, 22, 24, 26, 28, 30) festgelegt sind, und mit zumindest einem weiteren Heizelement (32), das zwischen den variablen Kochflächenbereichen (12, 14) angeordnet ist, und mit zumindest einer Steuereinheit (34), die dazu vorgesehen ist, das weitere Heizelement (32) in Abhängigkeit von zumindest einem Betriebsparameter zumindest einem der variablen Kochflächenbereiche (12, 14) zuzuordnen und zumindest eine Zuordnung des weiteren Heizelements (32) zu zumindest einem der variablen Kochflächenbereiche (12, 14) mittels zumindest einer Ausgabeeinheit (36) auszugeben, und mit der Ausgabeeinheit (36) mit zumindest zwei Ausgabeelementen (38, 40), die an einander gegenüberliegenden Seiten zumindest einer Abbildung (42) der variablen Kochflächenbereiche (12, 14) angeordnet sind.

2. Kochfeldvorrichtung nach Anspruch 1, **dadurch gekennzeichnet, dass** die Steuereinheit (34) dazu vorgesehen ist, eine Zuordnung des weiteren Heizelements (32) zu einem ersten der variablen Kochflächenbereiche (12, 14) mittels zumindest eines ersten Ausgabeelements (38) der Ausgabeeinheit (36) und eine Zuordnung des weiteren Heizelements (32) zu einem zweiten der variablen Kochflächenbereiche (12, 14) mittels zumindest eines zweiten Ausgabeelements (40) der Ausgabeeinheit (36) auszugeben.

3. Kochfeldvorrichtung nach einem der vorhergehenden Ansprüche, **dadurch gekennzeichnet, dass** die Steuereinheit (34) dazu vorgesehen ist, das weitere Heizelement (32) in Abhängigkeit von einer Gargeschirr-Belegung einem der variablen Kochflächenbereiche (12, 14) zuzuordnen.

4. Kochfeldvorrichtung nach einem der vorhergehenden Ansprüche, **dadurch gekennzeichnet, dass** die Steuereinheit (34) dazu vorgesehen ist, das weitere Heizelement (32) in Abhängigkeit von einer Bedieneingabe mittels zumindest einer Eingabeeinheit (44) einem der variablen Kochflächenbereiche (12, 14) zuzuordnen.

5. Kochfeldvorrichtung nach einem der vorhergehenden Ansprüche, **dadurch gekennzeichnet, dass** die Steuereinheit (34) dazu vorgesehen ist, eine existierende Zuordnung des weiteren Heizelements (32) zu einem der variablen Kochflächenbereiche (12, 14) in Abhängigkeit von einer Positionsänderung eines Gargeschirrs (46) zu verändern.

6. Kochfeldvorrichtung nach einem der vorhergehenden Ansprüche, **dadurch gekennzeichnet, dass** die den variablen Kochflächenbereich (12, 14) ausbildenden Heizelemente (16, 18, 20, 22, 24, 26, 28, 30) als längliche Heizelemente (16, 18, 20, 22, 24, 26, 28, 30) ausgebildet und bezüglich zumindest einer Längsachse (48) der Heizelemente (16, 18, 20, 22, 24, 26, 28, 30) der variablen Kochflächenbereiche (12, 14) benachbart angeordnet sind.

7. Kochfeldvorrichtung nach Anspruch 6, **dadurch gekennzeichnet, dass** das weitere Heizelement (32) als längliches Heizelement (32) ausgebildet ist und eine Längsachse (50) aufweist, die zumindest im Wesentlichen senkrecht zu den Längsachsen (48) der Heizelemente (16, 18, 20, 22, 24, 26, 28, 30) der variablen Kochflächenbereiche (12, 14) ausgerichtet ist.

8. Kochfeldvorrichtung nach einem der vorhergehenden Ansprüche, **dadurch gekennzeichnet, dass** die die variablen Kochflächenbereiche (12, 14) ausbildenden Heizelemente (16, 18, 20, 22, 24, 26, 28, 30) in einer einzelnen Reihe angeordnet sind.

9. Kochfeld, insbesondere Induktionskochfeld, mit zumindest einer Kochfeldvorrichtung (10) nach einem der Ansprüche 1 bis 8.

## Claims

1. Cooking hob device, in particular an induction cooking hob device, having at least two variable cooking surface areas (12, 14) which are configured separately from one another and which are each fixed by an arrangement of at least two heating elements (16, 18, 20, 22, 24, 26, 28, 30), and having at least one further heating element (32) which is disposed between the variable cooking surface areas (12, 14), and having at least one control unit (34) which is provided in order to assign the further heating element (32) as a function of at least one operating parameter to at least one of the variable cooking surface areas (12, 14) and to output at least one assignment of the further heating element (32) to at least one of the variable cooking surface areas (12, 14) by means of at least one output unit (36), and having the output unit (36) with at least two output elements (38, 40) which are arranged on opposing sides of at least one image (42) of the variable cooking surface areas (12, 14).

2. Cooking hob device according to claim 1, **characterised in that** the control unit (34) is provided to output an assignment of the further heating element (32) to a first of the variable cooking surface areas (12, 14) by means of at least one first output element (38) of the output unit (36) and to output an assignment of the further heating element (32) to a second of the variable cooking surface areas (12, 14) by means of at least one second output element (40) of the output unit (36).

3. Cooking hob device according to one of the preceding claims, **characterised in that** the control unit (34) is provided to assign the further heating element (32) to one of the variable cooking surface areas (12, 14) as a function of a cooking vessel occupancy.

4. Cooking hob device according to one of the preceding claims, **characterised in that** the control unit (34) is provided to assign the further heating element (32) to one of the variable cooking surface areas (12, 14) as a function of an operator input by means of at least one input unit (44).

5. Cooking hob device according to one of the preceding claims, **characterised in that** the control unit (34) is provided to change an existing assignment of the further heating element (32) to one of the variable cooking surface areas (12, 14) as a function of a change in position of a cooking vessel (46).

6. Cooking hob device according to one of the preceding claims, **characterised in that** the heating elements (16, 18, 20, 22, 24, 26, 28, 30) forming the variable cooking surface area (12, 14) are configured as elongated heating elements (16, 18, 20, 22, 24, 26, 28, 30) and are arranged adjacent to one another relative to at least one longitudinal axis (48) of the heating elements (16, 18, 20, 22, 24, 26, 28, 30) of the variable cooking surface areas (12, 14).

7. Cooking hob device according to claim 6, **characterised in that** the further heating element (32) is configured as an elongated heating element (32) and has a longitudinal axis (50) which is oriented at least substantially perpendicular to the longitudinal axes (48) of the heating elements (16, 18, 20, 22, 24, 26, 28, 30) of the variable cooking surface areas (12, 14).

8. Cooking hob device according to one of the preceding claims, **characterised in that** the heating elements (16, 18, 20, 22, 24, 26, 28, 30) forming the variable cooking surface areas (12, 14) are arranged in a single row.

9. Cooking hob, in particular induction cooking hob, having at least one cooking hob device (10) according to one of claims 1 to 8.

## Revendications

1. Dispositif de table de cuisson, notamment dispositif de table de cuisson à induction, comprenant au moins deux zones de surface de cuisson (12, 14) variables, lesquelles sont réalisées de manière séparée les unes des autres, lesquelles sont respectivement déterminées par une disposition d'au moins deux élément chauffants (16, 18, 20, 22, 24, 26, 28, 30), et comprenant au moins un élément chauffant supplémentaire (32) qui est disposé entre les zones de surface de cuisson (12, 14) variables, et comprenant au moins une unité de commande (34) qui est ménagée pour attribuer l'élément chauffant supplémentaire (32) au moins à l'une des zones de surface de cuisson (12, 14) variables en fonction d'au moins un paramètre de fonctionnement et pour sortir au moins une attribution de l'au moins un élément chauffant supplémentaire (32) à au moins l'une des zones de surface de cuisson (12, 14) variables au moyen d'au moins une unité de sortie (36), et comprenant une unité de sortie (36) dotée d'au moins deux éléments de sortie (38, 40) qui sont disposés sur des côtés opposés l'un à l'autre d'au moins une illustration (42) des zones de surface de cuisson (12, 14) variables.

2. Dispositif de table de cuisson selon la revendication 1, **caractérisé en ce que** l'unité de commande (34) est ménagée pour sortir une attribution de l'élément chauffant supplémentaire (32) à une première des zones de surface de cuisson (12, 14) variables au moyen d'au moins un premier élément de sortie (38) de l'unité de sortie (36), et une attribution de l'élément chauffant supplémentaire (32) à une deuxième des zones de surface de cuisson (12, 14) variables au moyen d'au moins un deuxième élément de sortie (40) de l'unité de sortie (36).

3. Dispositif de table de cuisson selon l'une quelconque des revendications précédentes, **caractérisé en ce que** l'unité de commande (34) est ménagée pour attribuer l'élément chauffant supplémentaire (32) à l'une des zones de surface de cuisson (12, 14) variables en fonction d'une affectation de récipient de cuisson.

4. Dispositif de table de cuisson selon l'une quelconque des revendications précédentes, **caractérisé en ce que** l'unité de commande (34) est ménagée pour attribuer l'élément chauffant supplémentaire (32) à l'une des zones de surface de cuisson (12, 14) variables en fonction d'une entrée de commande au moyen d'au moins une unité d'entrée (44).

5. Dispositif de table de cuisson selon l'une quelconque des revendications précédentes, **caractérisé en ce que** l'unité de commande (34) est ménagée pour modifier une attribution existante de l'élément chauffant supplémentaire (32) à l'une des zones de surface de cuisson (12, 14) variables en fonction d'une modification de position d'un récipient de cuisson (46).

6. Dispositif de table de cuisson selon l'une quelconque des revendications précédentes, **caractérisé en ce que** les éléments chauffants (16, 18, 20, 22, 24, 26, 28, 30) formant la surface de cuisson (12, 14) variable sont réalisés comme éléments chauffants (16, 18, 20, 22, 24, 26, 28, 30) oblongs et sont disposés de manière avoisinante par rapport à au moins un axe longitudinal (48) des éléments chauffants (16, 18, 20, 22, 24, 26, 28, 30) des zones de surface de cuisson (12, 14) variables.

7. Dispositif de table de cuisson selon la revendication 6, **caractérisé en ce que** l'élément chauffant supplémentaire (32) est réalisé comme élément chauffant (32) oblong et présente un axe longitudinal (50) qui est orienté au moins essentiellement perpendiculairement aux axes longitudinaux (48) des éléments chauffants (16, 18, 20, 22, 24, 26, 28, 30) des zones de surface de cuisson (12, 14) variables.

8. Dispositif de table de cuisson selon l'une quelconque des revendications précédentes, **caractérisé en ce que** les éléments chauffants (16, 18, 20, 22, 24, 26, 28, 30) formant les zones de surface de cuisson (12, 14) variables sont disposés en une seule rangée.

9. Table de cuisson, notamment table de cuisson à induction, comprenant au moins un dispositif de table de cuisson (10) selon l'une quelconque des revendications 1 à 8.
